# EUROPEAN PATENT APPLICATION

(11) **EP 1 241 606 A2**
(43) Date of publication of application: **18.09.2002**
(21) Application number: 01308843.0
(22) Date of filing: 18.10.2001
(51) Int. Cl.: G06F 17/60, G07G 1/00

(54) **Integrated shopping checkout**

(30) Priority: 24.10.2000 US 696339
(71) Applicant: Hewlett-Packard Company, Palo Alto, CA 94304 (US)
(72) Inventor: Currans, Kevin G., Philomath, OR 97370 (US)
(74) Representative: Jackson, Richard Eric

(57) **Abstract**

In order that the experience of on-line shopping be made easier for the shopper, the shopping checkout for several independent electronic merchants is combined into an integrated activity for the shopper.

## Description

### BACKGROUND OF THE INVENTION

The present invention generally relates to a method and apparatus for improved electronic commerce and more particularly relates to the integration of checkout and purchase of items selected from several electronic merchants.

The Internet has become a widely used vehicle for electronic commerce because it provides a low cost yet high-speed communication link between purchasers and vendors of goods and services. An increasingly large number of mass merchandisers as well as individual niche retailers use the Internet (i.e. the World Wide Web) to sell goods and services to customers. It is now possible to purchase virtually anything from nearly any geographic location via the Internet: office supplies, automobiles, air line tickets, books, hotel accommodations and groceries can now all be purchased on-line.

A challenge to those offering on-line shopping is that of making the experience easy for the shopper. A service termed Microsoft Passport offers a feature known as a wallet service, which allows a shopper the opportunity to store information from one or more credit cards and shipping addresses. When an on-line purchase is made from an electronic merchant, the shopper only needs to pass the credit card information and shipping address that is stored in the wallet to the electronic merchant in order to complete the purchase.

Others, offering on-line shopping services, have devised techniques involving virtual shopping carts to provide shoppers the opportunity to add items to their shopping carts as the shoppers browse the on-line offerings of the electronic merchant. Once an on-line shopper has concluded shopping, the shopper moves to a virtual checkout station to arrange payment and shipping terms with the e-merchant. Upon conclusion of the check out, the shopper may move to the website of another e-merchant for additional shopping and purchases from that e-merchant. Some on-line services offer an independent virtual shopping cart for each participating e-merchant and enable the on-line shopper the opportunity to independently fill the virtual shopping cart and make payments for the contents to each independent e-merchant.

Each e-merchant/shopper interaction involves independent shopping and purchase arrangements. Even with the simplification offered by a wallet service, the checkout process with each e-merchant is a redundant exercise that should be made easier and simpler for an on-line shopper. Moreover, e-merchants and aggregating on-line services that maintain a shopper's independent shopping carts have access the shopper's shopping habits and choices that the shopper may wish to maintain as private.

### SUMMARY OF THE INVENTION

An integrated checkout for a shopper purchasing items via a computer network from at least two independent e-merchants includes the selection of a first item for purchase from a first e-merchant and selection of a second item from a second e-merchant. Payment is arranged for both the first item and the second item during one checkout session.

### BRIEF DESCRIPTION OF THE DRAWINGS

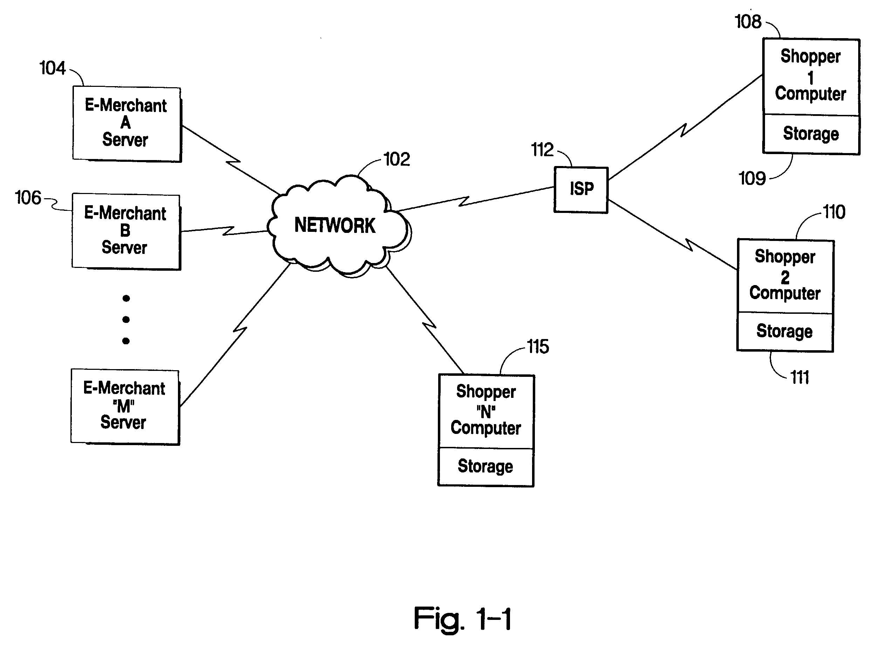

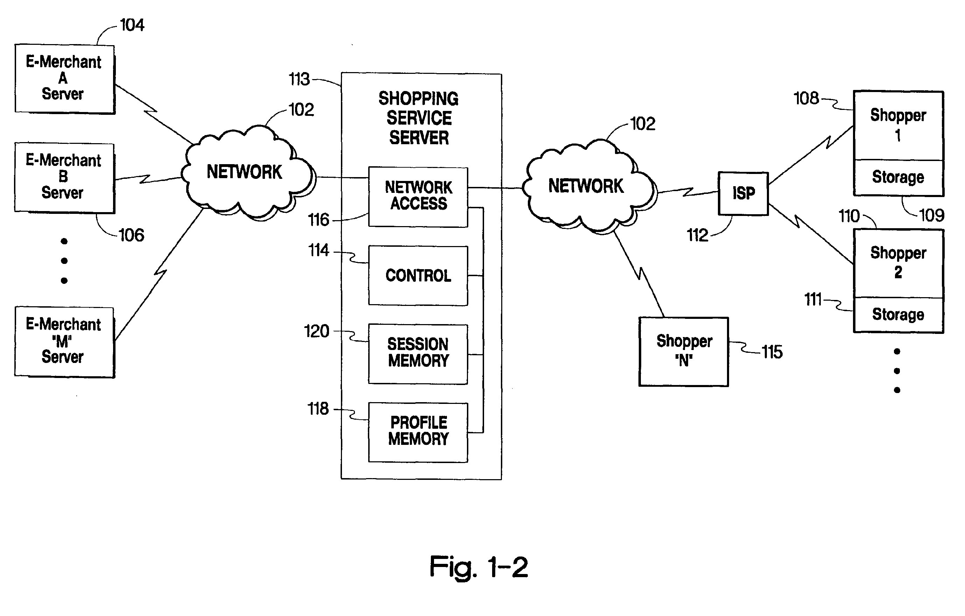

FIG. 1-1 is a simplified block diagram of an e-commerce arrangement, which may employ the present invention.
FIG. 1-2 is a simplified block diagram of an alternative e-commerce arrangement, which may employ the present invention.
FIGs. 2-1 and 2-2, combined, is a flowchart illustrating a process of electronic shopping with integrated checkout, which may be employed in the present invention.
FIG. 3 is an illustration of a display of a shopper's virtual shopping cart containing shopper-selected items, which virtual shopping cart may be employed in the present invention.
FIGs. 4-1 and 4-2, combined, is a flowchart illustrating an alternative process of electronic shopping with integrated checkout, which may be employed in the present invention.
FIG. 5 is an illustration of a display of a page presented to a shopper from which the shopper may select items.
FIG. 6 is a flowchart of a process of supplying e-merchant information to a shopping service, which may be employed in the present invention.

### DETAILED DESCRIPTION OF A PREFERRED EMBODIMENT

A shopper, interested in purchasing many items from different Internet web sites, currently must go through the independent checkout of each of the web sites. The present invention encompasses the capability of having an integrated checkout for a number of web sites so that a shopper can select, pay for, and arrange delivery of items from a plurality of independent web sites in one checkout event while maintaining privacy over the shopper's selections.

FIG. 1-1 shows a simplified block diagram of an e-commerce arrangement in a preferred embodiment that includes a computer communications network 102, such as the World Wide Web of the Internet, to which are coupled web server computers 104, 106 of e-merchants A and B, vendors of goods and services, and the computers 108, 110 of shopper 1 and shopper 2, prospective purchasers of various goods and services offered by the e-merchants. Of course, more e-merchants and more on-line shoppers participate in the e-commerce arrangement than are shown in FIG. 1. As is known to those skilled in the art, the Internet is a network of computers coupled together via different media and switching systems that facilitates the conduct of electronic commerce, in part, because it uses standardized techniques for exchanging information. E-merchant server computers of the web are typically programmed to provide information (e.g. text and graphics) about goods and services offered by various vendors. The e-merchant servers also provide interactive data exchanges with the shopper computers in that the e-merchant server can accept data and commands from a shopper computer whereby the shopper computer can inform an e-merchant server of goods and services that the shopper wishes to purchase.

In a preferred embodiment, transactions will occur between a shopper's computer system (directed by an application browser with a plug-in program offering the additional functionality of a shopping service) and an e-merchant's server via the network 102. For many shoppers, the connection to the network 102 is mediated by an Internet Service Provider (ISP) 112, although a direct coupling to the network is possible for some shoppers (for example, that interconnection for shopper "n" 115).

In an alternative embodiment of the present invention, illustrated in FIG 1-2, the shopper and e-merchant interaction is further mediated by a shopping service server 113 that provides confidential protection for the shopper's selections. A myriad of hardware configurations can comprise such a server depending upon the depth and extent of service being offered by the shopping service. It is expected that a control function 114, typically including a computer processor and the requisite operating system and applications program software, manage the server operation. Network access 116 is accomplished through modems or modem-like apparatii, which interface the server to, inter alia, the network 102. A profile memory 118, which can be an independent storage element or a physically or logically distinct portion of a multifunction storage, is used to maintain identifying features for each shopper that has registered for service with the service provider. In an enhanced version of the alternative embodiment, e-merchant characteristics and special offerings are retained in the profile memory. Also, a session memory 120, which may also be an independent element or a partition of a larger storage structure, is used to record the transactions between a shopper and the e-merchants during one shopping session.

It is a feature of either embodment of the present mention that a session need not be limited to one continuous period of time, but is expected to extend over several shopping events over the cours of time. As an example, a shopper may visit the websites of several e-merchants and add items to the single virtual shopping cart of the present invention. The shopper may discontinue shopping and even log off from the Internet for days. Upon the shopper's return, the shopper may resume the shopping process where the shopper left off, adding more items to the shopping cart from the same or different e-merchants and deleting items the shopper no longer wants to purchse. It can be expected that such an extended, discontinuous shopping session could be used as a gift-giving process for a "shopper", who is in reality a gift recipient.

In the preferred embodiment, in which the shopper's computer system retains the stored files representing the virtual shopping cart in local memory, the shopping session can continue off-line. Selected items can be removed from the virtual shopping cart and, to the extent that previously visited e-merchants' information about items offered for sale are saved, items added to the virtual shopping cart.

In an e-commerce exchange, the shopper computers 108 and 110 receive information obtained from the e-merchants to a human user. While discussion of hypertext transfer protocol ("HTTP") and other web programming and communications protocols are beyond the scope of this disclosure, a brief discussion of web-based e-commerce is provided herein for context, convenience, and completeness. The World Wide Web, which is also known simply as "the web" or "www", is part of the Internet and, by virtue of predefined communication standards and protocols, allows a server computer system, sometimes referred to as a web site, to send graphical and textual information to remote computer systems if both the server and user computers are appropriately coupled to, or have interface to, the web/Internet from an Internet service provider (ISP) 112. In addition to being able to send text and graphical information to a remote user computer, a web server can also accept or receive information from a user computer.

A user computer system, in this instance a shopper's computer system, is typically remotely located from an e-merchant's server computer system. A shopper system can request graphical and/or textual information from an e-merchant's server system by specifying from the shopper computer the Uniform Resource Locator (URL) of the e-merchant's web page containing the information. The requested information is transmitted from the e-merchant server system to the shopper system where it is saved and displayed on the shopper system, usually with the mediation of a commercially available web browser program.

When the e-merchant's web server receives the web page transfer request URL from the shopper, a copy of the computer data by which the web page is generated is sent to the shopper computer system (downloaded) over perhaps a variety of switching systems and intervening servers. When the web page data is received at the shopper, the browser program running on the shopper computer causes the web page to be displayed in a useful format on the shopper computer screen, or similar display (not shown).

The shopper computers communication access to the e-merchant servers is accomplished via the data network, (which in the preferred embodiment is the Internet, but which might also be for example an Ethernet network or other technology by which information can be shared between computers) and effectuated by the switching equipment of various Internet service providers (one of which is represented by ISP 112) and communications companies. In most embodiments, shopper computers that communicate with the web servers will be single-user, personal computers, however, for purposes of this disclosure and the appended claims, a shopper computer should be construed to include a single-user computer as well as a network of computers, work stations, PCs, PDAs, Internet-compatible cellular telephones, main frames and the like, spread over one or more locations and variants thereof.

In addition to Internet access service, access to the web, (or other network, such as Ethernet) also requires a physical or wireless link between the computers and the network. For example, a modem and a telephone line (not shown), is a medium by which a communications link to the ISP can be accomplished. Also, in some instances, a shopper computer system 115 can be configured for direct network access without ISP intervention.

A user's shopping experience is usually one of logging in to a selected e-merchant's website, navigating the pathways of the e-merchants website to peruse and select items for purchase, and metaphorically checkout by arranging payments for and shipment of the selected items. The shopper may then proceed to another e-merchant's website for item selection and checkout. This process has been equated to the use of a shopping cart in the physical world store. The present invention is directed to improving this shopping experience, making the experience easier for the shopper, and providing privacy for the shopper's selections.

Conventionally, each e-merchant's website is self-contained and provides its own shopping cart. Their servers have been developed so that e-merchants can advertise, sell product, and gain information about their customers that an be used to better target advertisements and indicates areas of product improvement. The products can include items that are delivered electronically to the purchaser over the Internet and items that are delivered through conventional distribution channels. The e-merchant's server computer system typically provides and electronic version of a catalog that lists the items that are available. A shopper may browse throughout the catalog using a browser installed on the shopper's computer and select various items to be purchased. When the shopper has completed the selection of the items to be purchased, the e-merchant's server computer system then prompts the user for information to complete the ordering of the items. This Purchaser-specific order information may include the shopper's name, the purchaser's credit card number, and a shipping address for the order. The e-merchant's server computer system then typically confirms the order by sending a confirming Web page to the client computer system and schedules shipment of the items.

When the shopper selects an item, the e-merchant's server computer system metaphorically adds that item to the shopping cart. The e-merchant's computer system provides web pages that allow the shopper to view and change the quantities of the items in the shopping cart. When the shopper is satisfied with the items in the shopping cart, the shopper checks out with the items that are in the shopping cart. The shopper usually provides billing and shipment information as part of the checkout process. When the check out is complete, the items are then shipped by the e-merchant with the shipment information, and the shopper is billed in accordance with the billing information.

A feature of the present invention is that a shopping service is provided to accumulate all of the individual checkout activities from each of the e-merchants into one integrated activity. It is as if all of the independent shops in a physical shopping mall were to forego their own independent cash register station at the exit portal of their shops in favor of a common cash register station serving the entire shopping mall.

In the preferred embodiment of the present invention, a plug-in applications program adds a shopping service functionality to a conventional web browser program designed to run on, or in conjunction with, a shopper's computer system. The shopper can, upon the installation of the plug-in, provide a transaction or credit profile for storage in association with the plug-in. The profile is expected to contain at least the desired credit arrangements and shipping arrangements, but can also contain shopper preferences such as desirable e-merchant Uniform Resource Locators (URLs). It should be noted that the shopping selections made by the shopper using the preferred embodiment are stored at the shopper's computer system and remain under the shopper's personal control at least until a decision to actually make a purchase is made.

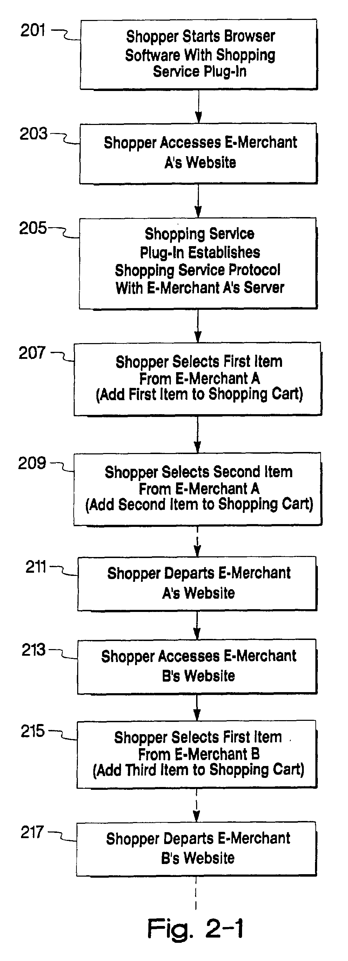

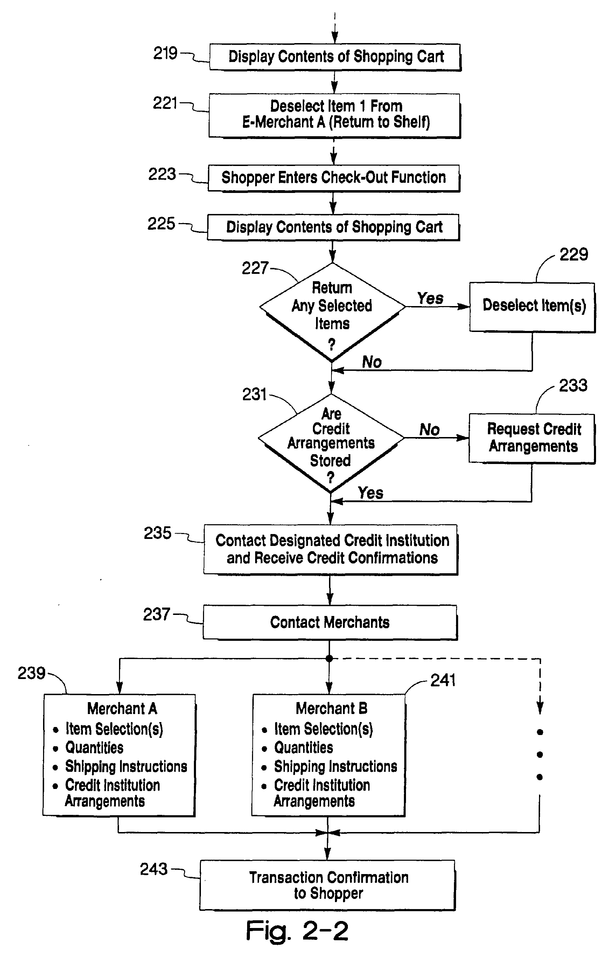

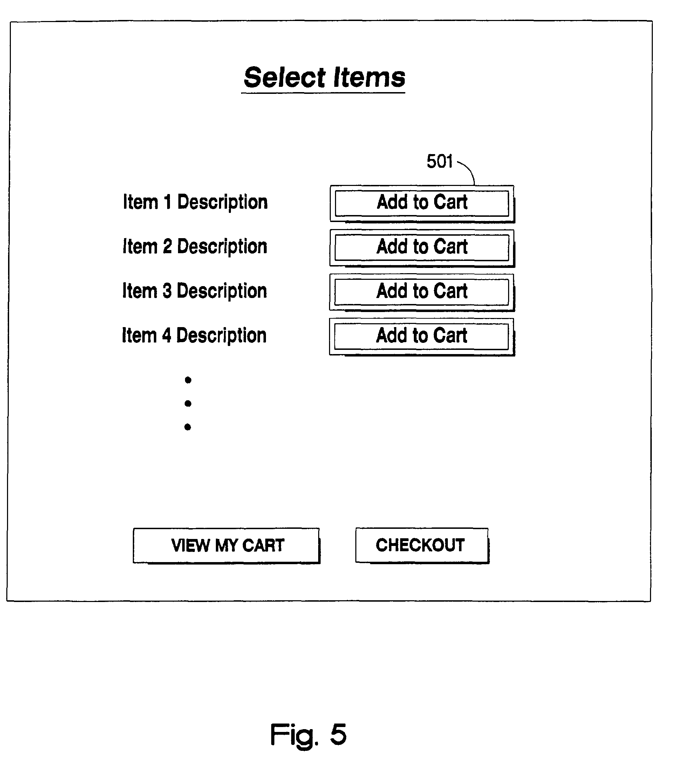

Referring, now, to FIGs. 2-1 and 2-2, the shopper begins a shopping session by activating the browser software and shopping service plug-in, at 201. A particular e-merchant website, for example that of e-merchant A, is accessed, at 203, for the shopper to begin shopping. The browser plug-in establishes a shopping service protocol with e-merchant A's server, at 205. The shopper then may begin a conventional shopping experience by reviewing the catalog items and descriptions in accordance with the format used by e-merchant A. The shopper is typically presented, at some point in the shopping experience, with a webpage that, in one format or another, presents the information illustrated in FIG. 5. Moving a mouse-directed indicator to a specific "Add to Cart" portion of the page (for example button 501) and clicking upon this designated sensitive area of the page results in the storage of the shopper's choice of an item (in this example, item 1). In the preferred embodiment, a shopper's selection of an item is not communicated to the e-merchant. The shopper's decision-making process and temporary selection of items (subject to later deselection) is shielded from the e-merchant and remains confidential to the shopper. Metaphorically speaking, item 1 has been selected, at 210, and added to the shopper's shopping cart. The shopper selects a second item (adding item 2 to the virtual shopping cart), at 209. The shopping experience will continue until the shopper decides to leave the website of e-merchant A. This the shopper may do, at 211, without checking out with e-merchant A. The virtual shopping cart follows the shopper to the next e-merchant since the shopping cart is, in a preferred embodiment, a stored file in storage 109, 111 in the shopper's computer system.

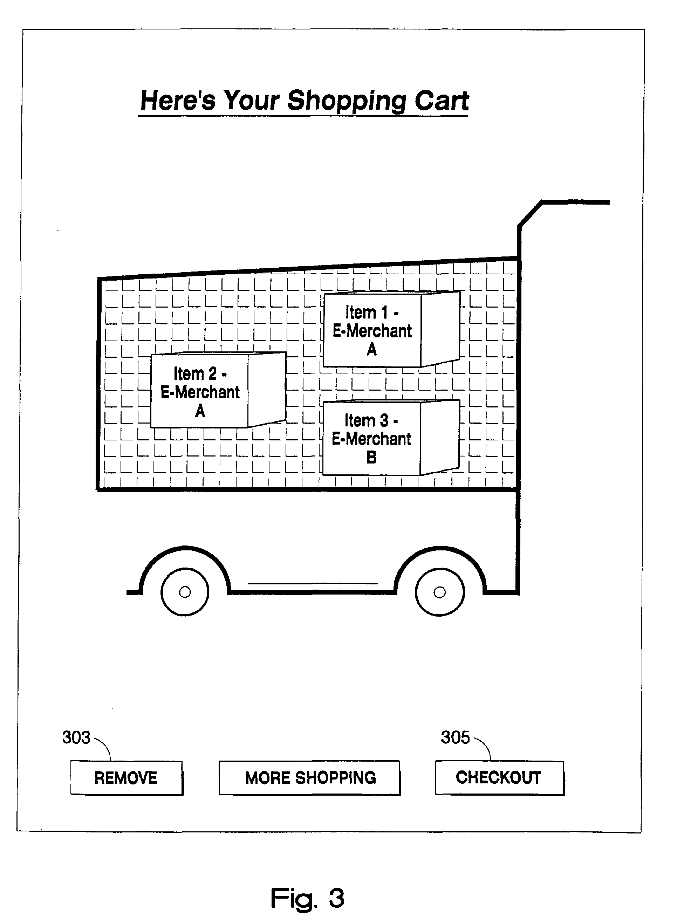

The shopper accesses e-merchant B's website, at 213, and proceeds to browse and shop, perhaps adding a third item to the virtual shopping cart by selecting a first item offered by e-merchant B, at 215. Eventually, the shopper exits e-merchant B's website, at 217, again without a checkout process. A feature of the present invention is that the shopper can review the contents of the shopping cart at nearly any time during the shopping session. This content review offers the capability of viewing all of the items in the shopping cart from all of the e-merchants from which items have been selected. Accordingly, a mouse-click on the shopping service page displays, at 219, the contents of the shopper's virtual shopping cart. An example of such a cart contents display is shown in FIG. 3. In a preferred embodiment, the shopper can mouse-click on, for example, item 2 from e-merchant A (resulting in a highlighting of this box on the shopper's display of the page) and then mouse-click on the "Remove" box. The shopper's browser then deselects, at 221, item 2 from the shopper's computer memory 109, 111. Thus, the shopper has returned, virtually, the previously selected item to merchant A. The experience is that of being able to return selected items to the display shelf of the various e-merchants without having to return to the website of the e-merchant whose item has been deselected.

At some time, the shopper will decide to end the shopping session and checkout with all of the selected items. As previously mentioned, the session can be discontinued in time and ends only when the shopper decides. Disconnecting from the Internet or turning off the shopper's computer system is not necessarily an end to the shopping session. The shopper enters the checkout function 223 of FIG. 2-2. In a preferred embodiment, the contents of the shopping cart are displayed, at 225, in a fashion illustrated in the example of FIG. 3, for the shopper to review the contents. A decision process is offered, at 227, for the shopper to effectively to put selected items back on the shelf of the e-merchant from which the item was initially selected, by deselecting one or more items, at 229 by, for example, mouse clicking on the "remove" button 303 of the page of FIG. 3. The shopper can continue in the process of checking out by mouse-clicking the "checkout" button 305 of FIG.3. In most instances, the shopper will have established a credit profile upon installing the shopping service plug-in. The checkout process determines, at 231, whether the shopper, in this instance, has a credit profile on file in the shopper computer system storage 109, 111. If the shopper has not stored a credit profile, unique arrangements are made, at 233, for payment for the items selected for the present session. If the shopper does have a credit profile on file or has made unique arrangements, a URL for a preferred credit institution is generated and the institution is contacted, at 235, to arrange for payment to be forwarded to the e-merchants from which items have been selected. A confirmation is received from the credit institution. The shopping service plug-in proceeds to contact each e-merchant that provided a selected item, at 237, by, in a preferred embodiment, generating associated URL commands for each e-merchant and appending information regarding the item selections, quantities, shipping instructions, and the payment confirmation from the credit institution, at 239, 241. The shopper is given feedback (which may include a session reference number) regarding the transaction that occurred during the checkout process, at 243.

In the alternative embodiment of the present invention, a user of a shopping service of the present invention will subscribe or preregister with the shopping service and become a "shopper". Such preregistration includes basic identifying characteristics of the shopper such as name, address, method of settling the account, preferred shipping location and carrier, etc. More advanced profiling may also be available, such as preferred e-merchants or blocked e-merchants or preferred advertisements. In any event, the shopper's profile will be accepted and saved in the profile memory 118. The shopping service is expected to protect the privacy of the shopper's choices and decision-making process. Each registered shopper's profile is maintained separate from and inaccessible to each other shopper as wll as to any of the e-merchants. It would be possible for shopping and product statistics to be gathered without infringing the privacy of any individual shopper or perhaps with payment of considerations to the shopper, but this is beyond the scope of the present invention.

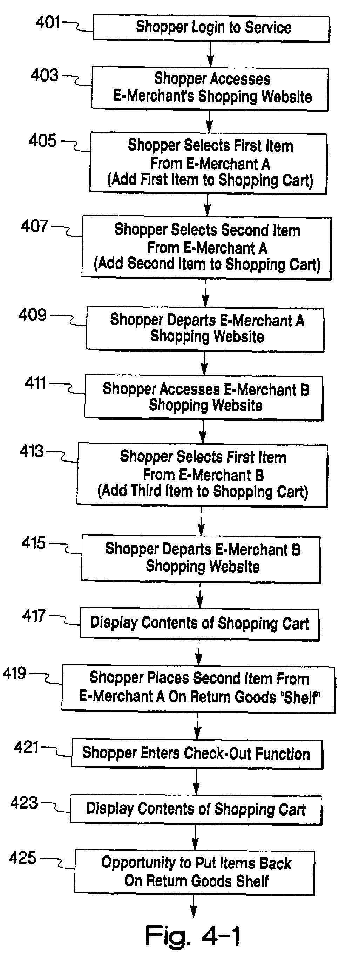

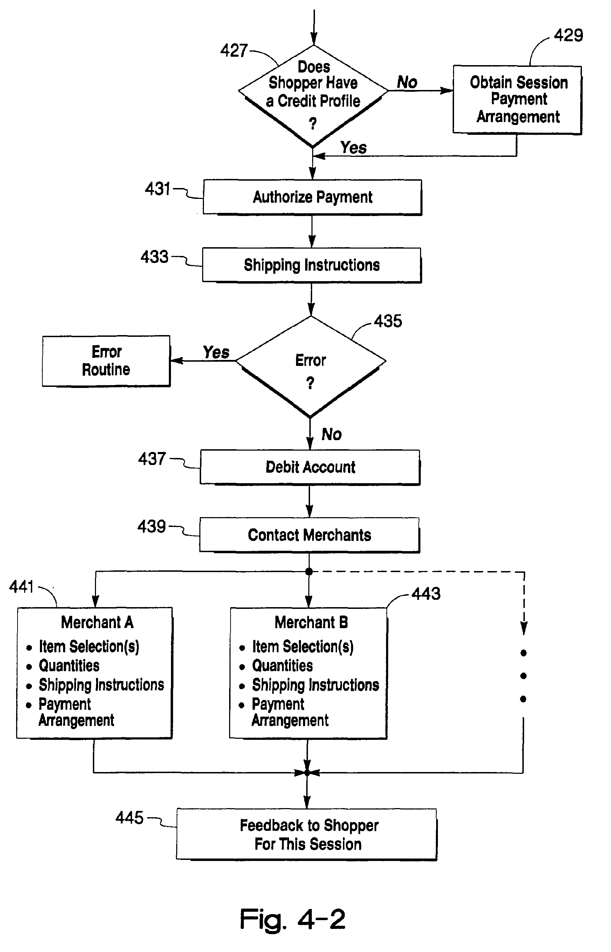

In order for a shopping session to begin, a registered shopper will access the shopping service server 113 by way of the network 102 (typically, the Internet) and the ISP 112. The process then proceeds as illustrated in the flowchart of FIG. 4-1. The shopper performs a conventional login procedure, at 401, for verification and, if necessary, security. The shopping service server, if it is so configured, accesses the shopper's profile from the preferred e-merchant selections. If the shopper is interested in new e-merchants, the shopping service will be asked for a display of all available e-merchants participating in the shopping service. The shopping service may categorize the e-merchants in ways that are efficient and pleasing to the shopper.

The shopper selects an e-merchant from the shopping services' list (preferably by clicking on an associated "radio" button displayed from the shopping service's webpage viewable at the shopper's location) thereby triggering the expression of the selected e-merchant's URL to the network 102 by the network access device 116. As a result of an information exchange between the e-merchant's server and the shopping service's server, the selected e-merchant's webpage is displayed to the shopper. Thus, the shoppers access an e-merchant's website, at 403.

Once the shopper is viewing the e-merchant's webpage, say, the webpage of e-merchant A, the shopper may browse the entire website. That is, the shopper can view all of the linked webpages and data sheets and any other information e-merchant A desires to make available. When the shopper finds an item that the shopper thinks is appropriate to purchase, the shopper can click on or otherwise select the item, represented at 405. This item selection metaphorically is a placement of the item into a shopping cart, thus enabling the shopper to carry the item around through the remainder of the store. In reality, of course, the selected item identification, cost, specifications, and other attributes are stored in the secure session memory 120 of the shopping server. As other items are encountered as the shopper browses, the shopper similarly places selected items into the virtual shopping cart. Thus, a second item can be selected by the shopper and placed into the cart, at 407.

This browsing can continue until the shopper decides to leave the website of e-merchant A. In conventional e-commerce shopping practice, the shopper encounters a checkout function prior to departure from the e-merchant's website. The shopper can deselect some of the items in the virtual shopping cart, arrange payment for and shipping of the selected items, or simply abandon the shopping cart and depart the e-merchant's website. In the present invention, the shopper departs from the e-merchant A's website, at 409, but the selected items remain in the shopping cart and are virtually transported with the shopper to another e-merchant's website.

Returning to FIG. 4-1, the shopper, after departing e-merchant A's website - but not checking out - accesses e-merchant B's website, at 411. Since the access to e-merchant B is mediated by the shopping service server 113 in the alternative embodiment, the shopper's login is prearranged by the shopping service. The shopper may move directly to the downloaded virtual catalog of items offered by e-merchant B and select an item for purchase from e-merchant B, at 413. This is the third item added to the shopper's shopping cart.

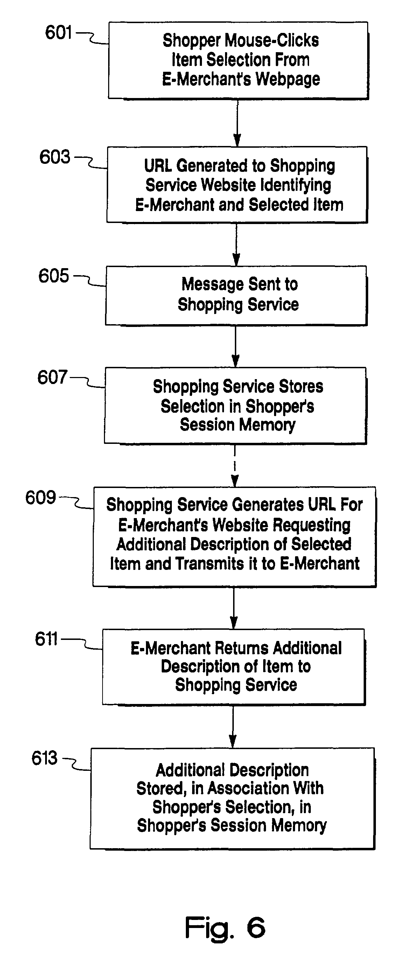

As in the preferred embodiment, it is a feature of the present invention that the shopper's virtual shopping cart remains with the shopper and not with a particular e-merchant. This is the perception offered to the shopper. The information regarding each selected item is stored in the session memory 120 of the shopping service server 113. Among the stored item identification and attributes are the e-merchant identification, the product sku, a brief written identification of the item, its price, and the desired quantity. Thus, and considering FIG. 6, when the shopper mouse-clicks on an item displayed on an e-merchant's webpage at the shopper's computer system display to select the item for purchase, at 601, the shopper's browser generates a URL directed to the shopping service server (not to the particular e-merchant whose website is being viewed by the shopper). The generated URL includes an identification of the selected item and the identity of the particular e-merchant, at 603. The shopper's browser and computer system sends the message to the shopping service, at 605. Upon receipt of the shopper's message and selection, the shopping service server stores the shopper's selection in the shopper's session memory, at 607, established for the shopper upon the shopper's original login to the shopping service. In some instances the shopping service server generates, at 609, a URL directed to the website of the e-merchant whose item was selected by the shopper. This URL includes an identification of the item selected and a code essentially requesting, *inter alia,* current price and delivery information about the selected item. In response, the e-merchant returns the additional description of the selected item to the shopping service server, at 611. The shopping service server stores the additional information in the shopper's session memory in a file associated with the selected item, at 613. This feature, available for both the alternative and the preferred embodiment, is particularly advantageous when a long period of time has elapsed between shopping events is a session. Prices for an item may have changed and delivery/availability may have been affected.

Returning again to FIG. 4-1, the shopper may continue browsing e-merchant B's web page but at some time the shopper will decide to depart e-merchant B's website, and does so at 415. A feature of the present invention is that the shopper can review the contents of the shopping cart at nearly any time during the shopping session. This contents review offers the capacity of viewing all of the items in the shopping cart from all of the e-merchants from which items have been selected. Accordingly, a mouse-click on the page being viewed by the shopper generates a URL and request to the shopping service to display the contents of the shopping cart, for example at 417. A page is returned from the shopping service to the shopper's browser for display to the shopper, and can take on the appearance as shown in FIG. 3. In a preferred embodiment, the shopper can mouse-click on, for example, Item 2 from e-merchant A (resulting in a highlighting of this box on the shopper's display of the page) and then mouse-click on the "remove" button 303. The shopper's browser then returns a message to the shopping service server to have the item 2 deleted from the shopper's session memory 120. Thus, the shopper has returned, virtually, the previously selected item to the shelf of merchant A, at 419. The experience is that of being able to return selected items to the various e-merchants without having to return to the website of the e-merchant whose item has been deselected.

At some time, the shopper will decide to end the shopping session (which, as previously mentioned, can be discontinuous in time) and check out with all of the selected items. The shopper enters the checkout function 421 of FIG. 4-1. In the preferred embodiment, the contents of the shopping cart are displayed, at 223, in a fashion illustrated in the example of FIG. 3, for the shopper to review the contents. Decisions can be made, for example at 425, to put selected items back on the shelf of the e-merchant from which the item was initially selected. The shopper can continue in the process of checking out by mouse-clicking the "checkout" button 305. In most instances, the shopper will have established a credit profile upon subscribing for the service offered by the shopping service. At the preference of the shopping service provider, a registering shopper may be allowed to opt out of registering a credit profile when signing up for the shopping service. The checkout process determines, at 427, whether the shopper, in this instance, has a credit profile on file in the profile memory 118. If the shopper does not have a credit profile stored at the shopping service server, unique arrangements are made, at 429, for payment for the items selected for the present session. One example of the arrangements to be made is the obtaining of a valid credit card number. If the shopper does have a credit profile at the server or has made unique arrangements, an authorization for payment is requested, at 431, and shipping instructions are checked or obtained, at 433. Provided that no error is detected, at 435, in the arrangements, the shopper's authorized account is debited, at 437, for the amount of the total purchase (including any charges that are unique to any given e-merchant). The shopping service server proceeds to contact each e-merchant that provided a selected item, at 439, by, in the preferred embodiment, generating associated URL commands for each e-merchant and appending information regarding the item selections, quantities, shipping instructions, and payment arrangements between the shopping service and the e-merchant, at 441, 443. The shopper is given feedback (which may include a session reference number) regarding the transaction that occurred during the checkout process, at 445.

In the foregoing description, embodiments of the present invention have shown how the shopping checkout can be made simpler and more uniform among e-merchants by having a single checkout operation shared between all e-merchants participating. The checkout process can be performed in a similar manner regardless of which e-merchant is participating in the transaction.

## Claims

1. A method of integrating the checkout process for a shopper purchasing items via a computer network from at least two independent e-merchants, comprising the steps of:
selecting (207) a first item for purchase from a first e-merchant of the at least two independent e-merchants;
selecting (209) a second item for purchase from a second e-merchant of the at least two independent e-merchants; and
arranging (231, 233, 235, 237, 239, 241) payment for both said first item and said second item during one checkout session.

2. A method of integrating the checkout process in accordance with the method of claim 1 further comprising the steps of:
selecting (215) a third item for purchase from said first e-merchant;
prior to said payment arranging step, displaying (219) an identification of said third item; and
deselecting (221) said third item prior to said payment arranging step.

3. A method of integrating the checkout process in accordance with the method of claim 1 further comprising the steps of:
accessing (203) an interactive page for purchasing offered by said first e-merchant prior to said step of selection of said first item; and
departing (211) said first e-merchant's interactive page prior to said payment arranging step.

4. A method of integrating the checkout process in accordance with the method of claim 1 wherein said step of selecting said first item further comprises the step of storing an attribute of said first item in a storage location unavailable to said first e-merchant.

5. A method of integrating the checkout process in accordance with the method of claim 1 wherein the shopper utilizes a web browser, further comprising the steps of:
detecting the shopper's selection of said first item, having an attribute;
detecting the shopper's selection of said second item, having an attribute;
detecting a checkout requirement activation by the shopper; and
in response to said activation detection, combining said first item attribute and said second item attribute in preparation for said arrangement of payment step.

6. A web browser for the terminal of a shopper that accesses content from at least two independent e-merchants, comprising:
a shopper choice detector (501) that selects (207) a first item, having an attribute, for purchase from a first e-merchant of the at least two independent e-merchants;
a shopper choice detector (501) that selects a second item (215), having an attribute, for purchase from a second e-merchant of the at least two independent e-merchants; and
a checkout activator (305) that, upon activation by the shopper, combines said first item attribute and said second item attribute for a single arrangement of payment by the shopper.

7. A web browser in accordance with claim 6 further comprising a memory store instruction that causes said first item attribute to be stored in a file in the computer of the shopper.

8. A web browser in accordance with claim 7 further comprising a memory recall instruction, responsive to said checkout activator, that causes said first item attribute to be recovered from said file.

9. A web browser in accordance with claim 6 further comprising a display generator that causes simultaneous display of said first item attribute and said second item attribute in a human-perceptible form for the shopper.

10. A web browser in accordance with claim 6 further comprising a shopper choice detector (501) that selects (215) a third item for purchase from said first e-merchant and a shopper cancel detector that deselects said third item.
